# EUROPEAN PATENT SPECIFICATION

(11) **EP 1 433 963 B1**
(45) Date of publication and mention of the grant of the patent: **17.05.2006**
(21) Application number: 03029388.0
(22) Date of filing: 19.12.2003
(51) Int. Cl.: F16B 45/02

(54) **A method for manufacturing karabiner parts made of folded sheet metal**
Verfahren zur Herstellung von Karabiner aus gefaltetem Metallblech
Procédé de fabrication de Mousqueton en tôle pliée

(30) Priority: 27.12.2002 IT MI20022774
(43) Date of publication of application: 30.06.2004
(73) Proprietor: Aludesign S.r.l., 24034 Cisano Bergamasco (BG) (IT)
(72) Inventor: Paglioli, Carlo, Mont Marenzo 23804 Lecco (IT)
(74) Representative: Marietti, Giuseppe

(56) References cited:
- GB-A- 136 230
- GB-A- 570 036
- US-A- 2 166 666
- US-A- 4 372 016

## Description

The present invention relates to a method for manufacturing shaped fingers for spring catches, and the fingers thus obtained.

GB-A-136230 discloses a method for the preparation of a spring billet. Firstly an elongated wire loop is produced and the two ends are joined; next the two sides of said loop are closed on one another and a doubled portion is formed at one end, while a circular eye is formed at the other end. Successively the short side of the billet is produced from a spring steel of a shape resembling the letter T having a stem at one end, and parallel arms at the other end. The stem of the T shaped steel is passed through the eye of the wire body and the parallel arms of the T shaped steel are closed on the doubled wire adjacent the eye. The stem of the T shaped steel is doubled over the parallel parts of the wire body. Lastly the end of the doubled wire body is bent into a hook so as to overlap the free end of the spring stem.

As is known, spring catches consist of a body, which is closed in a ring shape to hold a loop, slot or similar that is arranged inside it. Access to the inside of the spring catch is allowed by a manually openable arm, which is hinged to the body and held in a closed position by elastic means, generally by a spring.

The spring, which can be housed inside the mobile arm or in another position on the body of the spring catch, rests on a fixed point of the arm or body of the spring catch and is compressed, following the manual opening of the arm, by a shaped component, denominated finger.

The finger is shaped in such a way as to have one end engaged with the free end of the spring and the other end housed in a groove-shaped seat in the body or arm of the spring catch, in inverse dependence to the housing of the spring, a seat that is staggered in relation to the hinging point of the arm. In certain embodiments the finger can be the end part of the same spring, for example in the case of a flat spring.

When the arm is opened manually, the finger is consequently moved and compresses the spring, whereas when the arm is released the spring acts on the finger to take the arm back to the position of closure.

The fingers are generally made in metallic material or in a moulded plastic material. If made in metallic material they are usually in stainless or galvanised steel and can be obtained by turning or by punching from a tape. In any case, as the finger is made of a harder material than that of the spring catch (almost always in aluminium), it is clear that the critical work zone of the finger consists of the seat formed for the same on the body or arm of the spring catch, where the finger exerts a considerable thrust under the effect of the spring and where the finger must simultaneously be able to move, rotating through a certain angle in both directions. The danger is that the end of the finger over time wears the seat on the spring catch to such an extent as to cause a difficulty in the functioning of the arm or even a blockage of the finger or the arm in a trapped position.

In order to overcome this drawback, attempts have been made to use fingers in plastic material or turned fingers, which are decidedly more costly than the punched ones, that however have not resolved the problem due to inevitable small imperfections in the area destined to resting on the spring catch. The same thing occurred using punched fingers and then those radiused in the resting zone on the spring catch.

This said, the present invention overcomes the above-mentioned problem in an extremely simple, safe and cheap manner.

In order to achieve this aim, the invention provides a method for the manufacture of shaped fingers for spring catches according to claim 1, as well as a shaped finger for spring catches according to claim 8.

The invention will now be described in greater detail with reference to the annexed figures, where:
Figures 1, 2 and 3 are examples of spring catches with different arrangements of their finger.
Figures 4, 5, 6 and 7 illustrate different types of finger currently used.
Figures 8 and 9 illustrate, in an enlarged scale, the work conditions of a finger in its seat and the possible altering of the seat by a traditional finger respectively.
Figures 10 and 11 illustrate two steps of the finger manufacturing method according to a preferred embodiment of the invention.
Figures 12, 13, 14, and 15 illustrate a front view and a side view of a finger manufactured according to the present invention.

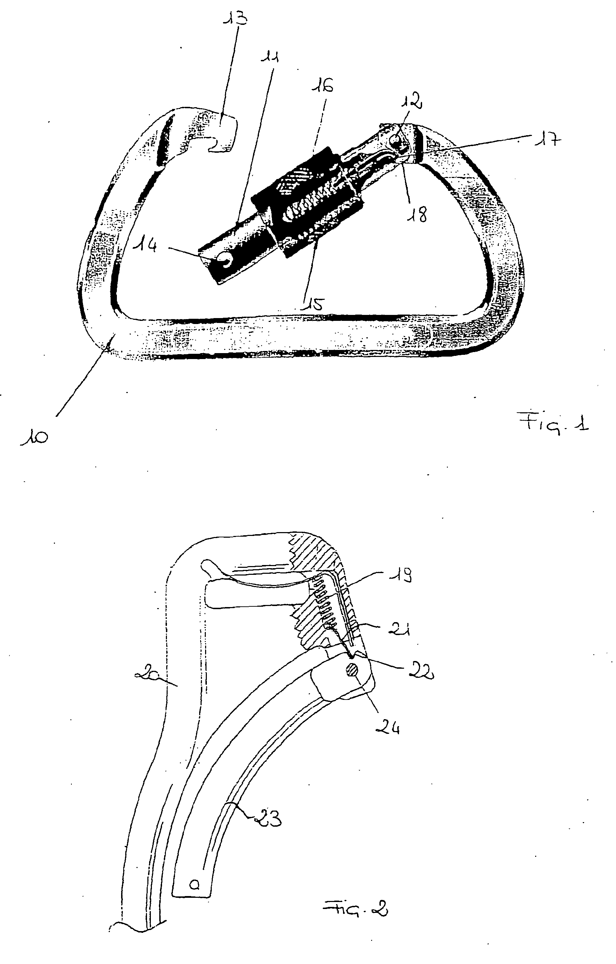

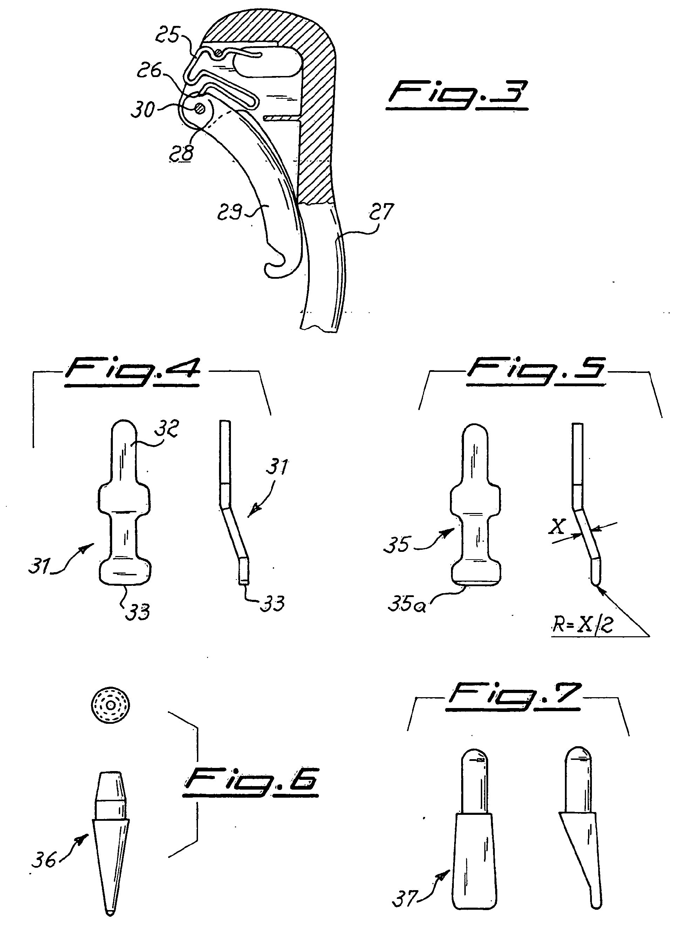

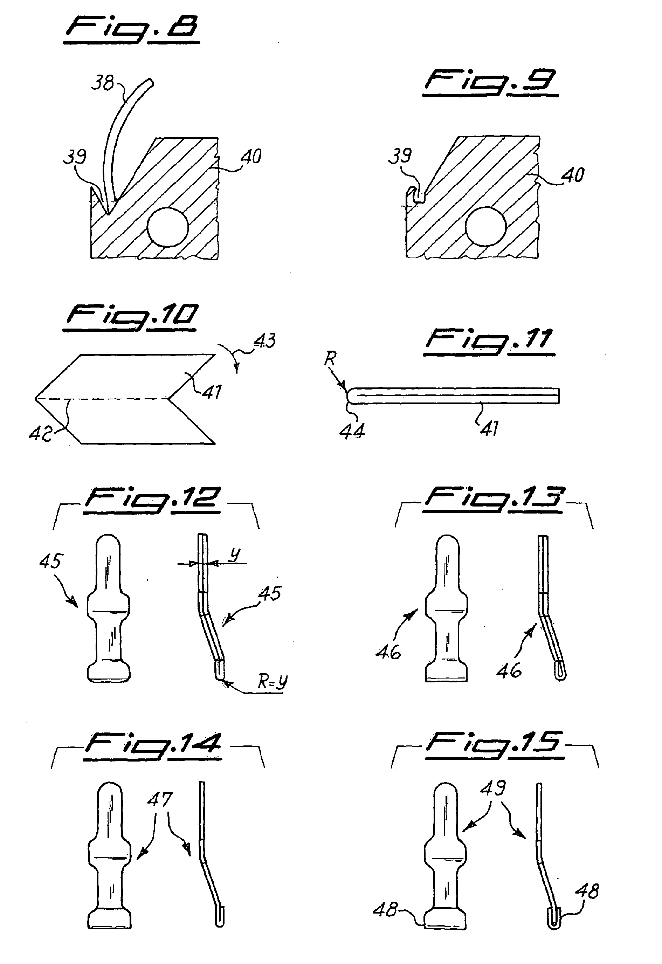

Referring first to Figure 1, there is shown a traditional type spring catch with a spring housed in the arm. More precisely, the body 10 of the spring catch, closed in on itself in a loop, includes an arm 11, hinged in 12 to the body 10 and suitable to rotate in order to make the inside of the body 10 accessible. In a closed position the arm 11 abuts against a nose 13 of the body 10, for example by means of rivets 14 and can be blocked by a screw retainer element 15.

In the example shown, a spring 16 is housed inside the arm 1 and is suitable to be compressed by a finger 17 that engages on one side with the free end of the spring 16 and on the other side with a seat 18 provided on the body of the spring catch, in a staggered position in relation to the pin 12. When the arm 11 is rotated manually into the position indicated, the finger 17 rotates in its seat and compresses the spring 16. When released, the spring 16, by means of the finger 17, takes the arm back to the closed position.

In the embodiment illustrated in figure 2, one can see how the spring 19 can be mounted in the fixed part of the body 20 of the spring catch and how the finger 21 rests in this case on a seat 22 formed on the arm 23, hinged into 24.

Finally, in figure 3, the spring 25 and the finger 26 are a single piece, with the spring housed inside the body 27 of the spring catch and the finger resting on a seat 28 of the arm 29, hinged into 30.

Figures 4 - 7 illustrate traditional fingers used with helical springs, as in the case of the spring catches in figures 1 and 2. The finger 31 of figure 4 is simply punched from a tape in stainless steel or galvanised steel and has a shaped end 32 to be engaged with the spring and an end 33 engaging with the seat of the spring catch. The end 33 obviously has sharp edges and deteriorates the seat of the spring catch. The finger 35 of figure 5 is still punched from a metallic tape, but has the end 35a destined to be inserted into the seat of the spring catch that is radiused, following additional processing, with a radius R that is half the thickness x of the finger. The work conditions are better than those of the finger in figure 4, but the cost is higher and above all the radiusing does not provide an ideal passage without interruption between the lateral walls of the finger and the radiused zone, this means that the problems and the drawbacks mentioned may still be present. The same can be said of the fingers 36 and 37 of figures 6 and 7, obtained respectively by turning in metallic material and by moulding in plastic material.

Figure 8 illustrates in greater detail the resting conditions of a finger 38 in a seat 39 made on the body 40 of the spring catch and figure 9 shows how the seat 39 can be deteriorated over time by a conventional type of finger.

In order to avoid these drawbacks and at the same time make a low cost finger, one starts with a sheet or tape 41 (fig. 10) in metallic material, for example stainless steel or galvanised steel, and folds it in two making one part of the tape 41 rotate around an ideal straight line 42, in the direction of the arrow 43. Once the folding has been completed, the tape is as illustrated in figure 11. It should be noted that the tape has a thickness equal to y, or rather equal to half of the necessary thickness (for example x) of a finger and that the join 44 between the external surfaces of the folded tape has a radius of R=y and a perfect and perfectly joined movement, without interruption, to the outer walls of the tape. The tape thus folded is then subject to a traditional punching operation to obtain the finger 45 of figure 12, with thickness x=2y.

This finger is characterised by its join being at the end which is intended to operate onto the spring catch that is devoid of discontinuities and presents the utmost regularity due to its construction, thus avoiding the abovementioned drawbacks.

The same results can also be obtained by making a finger of the type illustrated with 46 in figure 13, where the join between the two parts of tape is not completely closed but forms a slot, however again creating a join absolutely devoid of interruptions.

Figure 14 illustrates another embodiment of the finger 47 where the starting tape is only partially folded to form the finger join zone only. Obviously, in this case the thickness of the starting tape will be greater than that of y in figure 12.

Finally, a sort of hood with a U-shaped section 48 may also be made, which is subsequently applied to a finger 49 of the usual type, as illustrated in figure 15.

## Claims

1. Method for the manufacture of shaped fingers (45,46,47,49) for spring catches, of the punched type starting from a metal tape (41) or sheet of the starting material of a suitable thickness, **characterised in that** it comprises the steps of
a) folding this tape on itself, and
b) punching one or more fingers or parts of fingers (45,46,47,49) from the folded tape (41) in a position in which the folded zone of the tape coincides with the end of each finger (45,46,47,49) destined to be housed in the seat (22,28,39) of the spring catch.

2. The method for the manufacture of shaped fingers for spring catches according to claim 1, **characterised in that** the tape folding step is performed until an overlap and a mutual contact of the two internal surfaces of the folded tape (41) are achieved.

3. The method for the manufacture of shaped fingers for spring catches according to claim 1, **characterised in that** the tape folding step is performed leaving a slot-shaped configuration in the folded area.

4. The method for the manufacture of shaped fingers for spring catches according to claim 2 or 3, **characterised in that** a starting tape or sheet (41) of material of a thickness substantially equal to half of the foreseen thickness of the finished finger is provided.

5. The method for the manufacture of shaped fingers for spring catches according to claim 2 or 3, **characterised in that** the starting tape (41) is folded to form only a length of finger (47) on one side of the fold.

6. The method for the manufacture of shaped fingers for spring catches according to claim 3, **characterised in that** the starting tape (41) is folded to form only the end part of the finger which is destined to be housed in the seat (22,28,39) of the spring catch and the folded part applied to the base of a traditional finger (17,21,26,31,35-37).

7. The method for the manufacture of shaped fingers for spring catches according to one of the previous claims, **characterised in that** it provides a tape (41) of the starting material in stainless steel or galvanised steel.

8. Finger for spring catches, of the punched type starting from a tape (41) in metallic material and shaped such as to present an end suitable to be coupled to a spring (16,19,25) housed inside the arm (11,23,29) of the spring catch or on the body (10,20,27) of the spring catch and the other end suitable to rest against a hollow seat (22,28,39) provided on the body (10,20,27) or on the arm (11,23,29) of the spring catch respectively, in a staggered position in relation to the point of hinging (24,30) of the arm on the body (10,20,27) of the spring catch, **characterised in that** at least the zone of the finger (45,46,47,49) corresponding to said other end is formed by two overlapping parts, which are united and joined to one another by folding.

9. A finger for spring catches according to claim 8, **characterised in that** the folded end presents a constant curve radius (R) and a join devoid of discontinuities.

10. A finger for spring catches according to claim 8 or 9, **characterised in that** it is formed by two identical and overlapping parts, which are joined to the folded end.

11. A finger for spring catches according to claim 8 or 9, **characterised in that** it presents on one side of the fold zone only a length of tape (41) shorter than the total length of the finger (47).

12. A finger for spring catches according to claim 8 or 9, **characterised in that** said overlapping and joined parts form a hood with a U-shaped section (48) applied to the base of the finger (49).

13. A finger for spring catches according to one of the claims 8 to 12, **characterised in that** it is made of metallic material.

14. A finger for spring catches according to claim 13, **characterised in that** it is made of stainless steel or galvanised steel.

## Patentansprüche

1. Verfahren zur Herstellung geformter Finger (45,46,47,49) für Karabinerhaken in gestanzter Ausführung, ausgehend von einem Metallstreifen (41) oder -blech des Ausgangsmaterials von geeigneter Dicke, **dadurch gekennzeichnet, dass** das Verfahren die Schritte umfasst:
a) Zusammenfalten des Streifens und
b) Ausstanzen eines oder mehrerer Finger oder Teile von Fingern (45,46,47,49) aus dem gefalteten Streifen (41) an einer Stelle, an der die Faltzone des Streifens mit dem Ende eines jeden am Auflagepunkt (22,28,39) des Karabinerhakens unterzubringenden Fingers (45,46, 47,49) zusammenfällt.

2. Verfahren zur Herstellung geformter Finger für Karabinerhaken nach Anspruch 1, **dadurch gekennzeichnet, dass** der Schritt des Faltens des Streifens so ausgeführt wird, bis Überlappung und gegenseitiger Kontakt der beiden Innenflächen des gefalteten Streifens (41) erreicht sind.

3. Verfahren zur Herstellung geformter Finger für Karabinerhaken nach Anspruch 1, **dadurch gekennzeichnet, dass** der Schritt des Faltens des Streifens zu einer spaltförmigen Anordnung im gefalteten Bereich führt.

4. Verfahren zur Herstellung geformter Finger für Karabinerhaken nach Anspruch 2 oder 3, **dadurch gekennzeichnet, dass** ein Ausgangsstreifen oder -blech (41) eines Materials mit einer Dicke, die im Wesentlichen gleich der Hälfte der vorgesehenen Dicke des fertigen Fingers ist, bereitgestellt wird.

5. Verfahren zur Herstellung geformter Finger für Karabinerhaken nach Anspruch 2 oder 3, **dadurch gekennzeichnet, dass** der Ausgangsstreifen (41) so gefaltet wird, dass lediglich eine Länge des Fingers (47) auf einer Seite der Faltung gebildet wird.

6. Verfahren zur Herstellung geformter Finger für Karabinerhaken nach Anspruch 3, **dadurch gekennzeichnet, dass** der Ausgangsstreifen (41) so gefaltet wird, dass nur der Endteil des am Auflagepunkt (22,28,39) des Karabinerhakens unterzubringenden Fingers gebildet und der gefaltete Teil auf die Basis eines herkömmlichen Fingers (17,21,26,31,35-37) aufgebracht wird.

7. Verfahren zur Herstellung geformter Finger für Karabinerhaken nach einem der vorherigen Ansprüche, **dadurch gekennzeichnet, dass dadurch** ein Streifen (41) des Ausgangsmaterials aus Edelstahl oder verzinktem Stahl bereitgestellt wird.

8. Finger für Karabinerhaken in gestanzter Ausführung, ausgehend von einem Streifen (41) aus einem metallischen Material, und so geformt, dass ein Endstück entsteht, das geeignet ist, an einer Feder (16,19,25) angebracht zu werden, die innerhalb des Arms (11,23,29) des Karabinerhakens oder am Körper (10,20,27) des Karabinerhakens untergebracht ist, und dass das andere Endstück geeignet ist, an einer hohlen Auflage (22,28,39) aufzuliegen, die am Körper (10,20,27) beziehungsweise am Arm (11,23,29) des Karabinerhakens in einer bezüglich des Aufhängepunkts (24,30) des Arms am Hauptteil (10,20,27) des Karabinerhakens versetzten Position vorgesehen ist, **dadurch gekennzeichnet, dass** so wenigstens der Bereich des Fingers (45,46,47,49), der dem anderem Ende entspricht, durch zwei überlappende Teile gebildet wird, die durch Falten zusammengebracht werden und miteinander verbunden sind.

9. Finger für Karabinerhaken nach Anspruch 8, **dadurch gekennzeichnet, dass** das gefaltete Ende einen konstanten Kurvenradius (R) aufweist sowie eine Verbindung, die frei von Unregelmäßigkeiten ist.

10. Finger für Karabinerhaken nach Anspruch 8 oder 9, **dadurch gekennzeichnet, dass** er aus zwei identischen und überlappenden Teilen gebildet ist, die mit dem gefalteten Ende verbunden sind.

11. Finger für Karabinerhaken nach Anspruch 8 oder 9, **dadurch gekennzeichnet, dass** er an einer Seite der Faltungszone nur eine Länge des Streifens (41) aufweist, die kürzer ist als die Gesamtlänge des Fingers (47).

12. Finger für Karabinerhaken nach Anspruch 8 oder 9, **dadurch gekennzeichnet, dass** die verbundenen und überlappenden Teile eine Kappe mit einem U-förmigen Bereich (48) bilden, die auf die Basis des Fingers (49) aufgebracht ist.

13. Finger für Karabinerhaken nach einem der Ansprüche 8 bis 12, **dadurch gekennzeichnet, dass** er aus einem metallischen Material hergestellt ist.

14. Finger für Karabinerhaken nach Anspruch 13, **dadurch gekennzeichnet, dass** er aus Edelstahl oder verzinktem Stahl hergestellt ist.

## Revendications

1. Procédé de fabrication de doigts emboutis (45, 46, 47, 49) pour fermetures à ressort, du type embouti commençant à partir d'une bande ou d'une feuille de métal (41) du matériau initial d'épaisseur adéquate, **caractérisé en ce qu'**il comprend les étapes de
a) pliage de la bande sur elle-même, et
b) emboutissage de un ou plusieurs doigts ou parties de doigt (45, 46, 47, 49) à partir de la bande pliée (41) dans une position dans laquelle la zone pliée de la bande coïncide avec l'extrémité de chaque doigt (45, 46, 47, 49) destinée à être logée dans le siège (22, 28, 39) de la fermeture à ressort.

2. Procédé de fabrication de doigts emboutis pour fermetures à ressort selon la revendication 1, **caractérisé en ce que** l'étape de pliage de la bande est accomplie jusqu'à ce qu'un chevauchement et un contact mutuel entre les deux surfaces intérieures de la bande pliée (41) soient réalisés.

3. Procédé de fabrication de doigts emboutis pour fermetures à ressort selon la revendication 1, **caractérisé en ce que** l'étape de pliage de la bande est accomplie en laissant une configuration en forme de fente dans la zone pliée.

4. Procédé de fabrication de doigts emboutis pour fermetures à ressort selon la revendication 2 ou 3, **caractérisé en ce qu'**une bande ou feuille de départ (41) d'un matériau d'une épaisseur sensiblement égale à la moitié de l'épaisseur prévue pour le doigt terminé est prévue.

5. Procédé de fabrication de doigts emboutis pour fermetures à ressort selon la revendication 2 ou 3, **caractérisé en ce que** la bande de départ (41) est pliée pour former seulement une longueur de doigt (47) sur un côté du pli.

6. Procédé de fabrication de doigts emboutis pour fermetures à ressort selon la revendication 3, **caractérisé en ce que** la bande de départ (41) est pliée pour former seulement la partie de l'extrémité du doigt qui est destinée à être logée dans le siège (22, 28, 39) de la fermeture à ressort et la partie pliée appliquée à la base d'un doigt traditionnel (17, 21, 26, 31, 35-37).

7. Procédé de fabrication de doigts emboutis pour fermetures à ressort selon l'une quelconque des revendications précédentes, **caractérisé en ce qu'**il prévoit une bande (41) du matériau de départ en acier inoxydable ou en acier galvanisé.

8. Doigt pour fermetures à ressort, du type embouti commençant à partir d'une bande (41) en matériau métallique et formé de façon à présenter une extrémité adaptée pour être couplée à un ressort (16, 19, 25) logé à l'intérieur du bras (11, 23, 29) de la fermeture à ressort ou sur le corps (10, 20, 27) de la fermeture à ressort et l'autre extrémité adaptée pour reposer contre un siège creux (22, 28, 39) disposé sur le corps (10, 20, 27) ou sur le bras (11, 23, 29) de la fermeture à ressort respectivement, dans une position décalée par rapport au point d'articulation (24, 30) du bras sur le corps (10, 20, 27) de la fermeture à ressort, **caractérisé en ce qu'**au moins la zone du doigt (45, 46, 47, 49) correspondant à ladite autre extrémité est formée par deux parties se chevauchant, lesquelles sont unies et jointes l'une à l'autre par pliage.

9. Doigt pour fermetures à ressort selon la revendication 8, **caractérisé en ce que** l'extrémité pliée présente un rayon de courbure constant (R) et une jonction dépourvue de discontinuités.

10. Doigt pour fermetures à ressort selon la revendication 8 ou 9, **caractérisé en ce qu'**il est formé de deux parties identiques et superposées, qui sont jointes à l'extrémité pliée.

11. Doigt pour fermetures à ressort selon la revendication 8 ou 9, **caractérisé en ce qu'**il présente sur un côté de la zone de pli seulement une longueur de bande (41) plus courte que la longueur totale du doigt (47).

12. Doigt pour fermetures à ressort selon la revendication 8 ou 9, **caractérisé en ce que** lesdites parties superposées et jointes forment un dôme avec une section en U (47) appliqué à la base du doigt (49).

13. Doigt pour fermetures à ressort selon l'une quelconque des revendications 8 à 12, **caractérisé en ce qu'**il est réalisé dans un matériau métallique.

14. Doigt pour fermetures à ressort selon la revendication 13, **caractérisé en ce qu'**il est en acier inoxydable ou en acier galvanisé.
